# EUROPÄISCHE PATENTSCHRIFT

(11) **EP 0 560 090 B1**
(45) Veröffentlichungstag und Bekanntmachung des Hinweises auf die Patenterteilung: **06.05.1998**
(21) Anmeldenummer: 93102454.1
(22) Anmeldetag: 17.02.1993
(51) Int. Cl.: C08F 297/08

(54) **Cycloolefinblockcopolymere und Verfahren zu ihrer Herstellung**
Cyclo-olefin block copolymers and process for preparing same
Copolymère-bloc de cyclo-oléfine et méthode pour les préparer

(30) Priorität: 22.02.1992 DE 4205416
(43) Veröffentlichungstag der Anmeldung: 15.09.1993
(73) Patentinhaber: Ticona GmbH, 65926 Frankfurt am Main (DE)
(72) Erfinder: Brekner, Michael-Joachim, Dr., W-6000 Frankfurt am Main 71 (DE); Osan, Frank, Dr., W-6233 Kelkheim/Ts. (DE); Rohrmann, Jürgen, Dr., W-6233 Kelkheim/Ts. (DE)

(56) Entgegenhaltungen:
- EP-A- 0 433 986
- EP-A- 0 447 035
- DE-A- 3 835 044

## Beschreibung

Die Erfindung bezieht sich in erster Linie auf ein Verfahren zur Herstellung von Cycloolefinblockcopolymeren, wobei die Polymerketten aus mindestens zwei chemisch unterschiedlichen Blöcken aufgebaut sind und das Cycloolefin ohne Ringöffnung polymerisiert wird. Der Übergang von einem Block zum nächsten kann über einen Zwischenblock erfolgen, der sich dadurch auszeichnet, daß in ihm eine kontinuierliche, graduelle Veränderung des chemischen Aufbaus von dem des einen Blocks hin zu dem chemischen Aufbau des nächsten Blocks erfolgt.

Die nach bekannten Verfahren herstellbaren Cycloolefincopolymere (vgl. z. B. EP-A 407 870) zeigen einen statistischen oder vermeintlich alternierenden Kettenaufbau. Diese Copolymere, die grundsätzlich für die Herstellung einer Vielzahl von Formkörpern geeignet sind, weisen jedoch in der Regel nur geringe Zähigkeiten auf, die sich z.B. in Reißdehnungen von ≤ 8 % ausdrücken, und sind daher in dieser Hinsicht verbesserungswürdig.

Auch weisen Cycloolefincopolymere mit hohen thermischen Formbeständigkeiten relativ hohe Schmelzviskositäten auf.

In der Anmeldung WO 91/12285 werden Blockcopolymere auf der Basis von 1-Olefinen beschrieben.

Eine Methode, um die Zähigkeit eines Polymers zu verbessern, ist das Mischen des entsprechenden Polymers mit einer sogenannten Weichphase, einem Polymer mit einer deutlich niedrigeren Glastemperatur. Solche Mischungen zeigen wegen des Weichanteils grundsätzlich auch geringere Schmelzviskositäten.

Man findet sehr oft, daß Mischungen aus Cycloolefincopolymeren mit sehr unterschiedlichen Glastemperaturen miteinander nicht verträglich sind. Unverträglichkeit bringt in der Regel schlechte mechanische Eigenschaften mit sich, wenn nicht dafür Sorge getragen wird, daß eine gute Phasenanbindung entsteht.

Eine gängige Methode zur Verbesserung der Phasenanbindung ist das Zumischen eines polymeren Phasenvermittlers, der sich dadurch auszeichnet, daß seine Kette sowohl in der einen als auch in der zweiten Phase physikalisch oder chemisch verankert ist (vgl. Rubber Toughened Plastics, Advances in Chemistry Series, Washington DC, 222, 1989; S. 3 - 64).

Aus EP-A-447035 ist ein Verfahren zur Herstellung einer Ethylenpolymerzusammensetzung mit einer Dichte von 0.86 bis 0.94 g/cm³ und einer Viskosität von 1 bis 6 dl/g bekannt. Die Polymerzusammensetzung wird in Gegenwart eines Polyolefinkatalysators durchgeführt, der eine Übergangsmetallverbindung mit einem Cycloalkyldienylliganden und Organoaluminiumverbindung enthält.

Aus DE-A-3835044 ist ein Verfahren zur Herstellung von Cycloolefinenpolymeren bekannt. Dabei werden Mono- und Copolymerisate von polycyclischen Olefinen ohne Ringöffnung mit einer hohen Polymerisationsgeschwindigkeit bei technisch günstigen Polymerisationstemperaturen mittels eines Katalysators erhalten, welcher aus einer stereorigiden chiralen Metallocenverbindung der Gruppen IVb bis VIb des Periodensystems der Elemente und einem Aluminoxan besteht.

Aus EP-A-433986 ist ein Verfahren zur Herstellung einer Polypropylenformmasse bekannt. Dabei wird durch Copolymerisation von Propylen mit Ethylen oder einem 1-Olefin in Gegenwart eines Katalysators, bestehend aus einem Metallocen und einem Aluminoxan, eine Polypropylenformmasse mit syndiotaktischen Polymerketten in hoher Ausbeute erhalten.

Die der Erfindung zugrunde liegende Aufgabe bestand somit darin, einen Phasenvermittler für Cycloolefincopolymere mit unterschiedlicher Glastemperatur und ein Verfahren zu dessen Herstellung aufzufinden.

Es wurde überraschend gefunden, daß bei einer speziellen Polymerisationsführung, basierend auf einer Katalyse mit Metallocenkatalysatoren, Polymere entstehen, die sich als Phasenvermittler gut eignen und in verschiedenen Fällen sogar eine Mischbarkeit unterschiedlicher Cycloolefincopolymere ermöglichen. Mischbarkeit bedeutet dabei, daß die fertige Polymermischung eine einzige Glastemperatur aufweist, bzw. die Glastemperaturen der Mischung näher beieinanderliegen als die Glastemperaturen der Reinkomponenten.

Eine kinetische Untersuchung hat gezeigt, daß es sich bei den erfindungsgemäß hergestellten Polymermaterialien um Cycloolefinblockcopolymere handelt.

Die Erfindung betrifft somit ein Verfahren zur Herstellung eines Cycloolefinblockcopolymers, dadurch gekennzeichnet, daß man 0,1 bis 95 Gew.-%, bezogen auf die Gesamtmenge der eingesetzten Monomeren, mindestens eines Monomers der Formeln I, II, III, IV, V oder VI 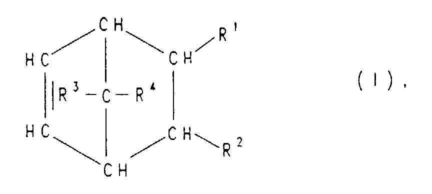 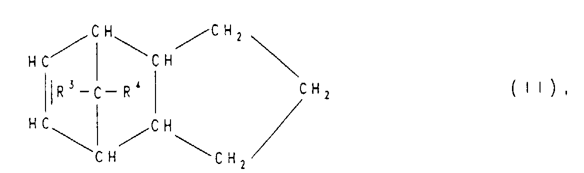 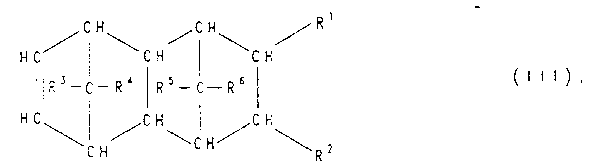 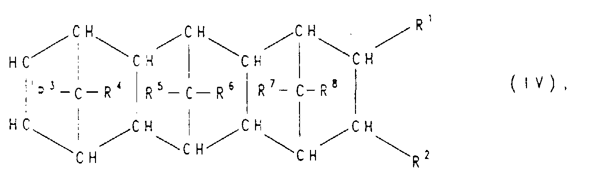 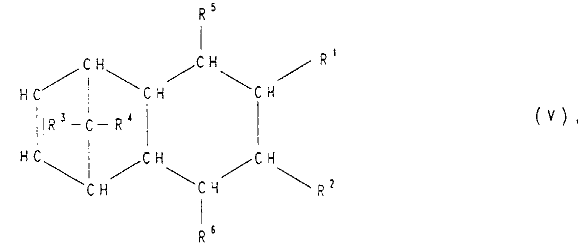 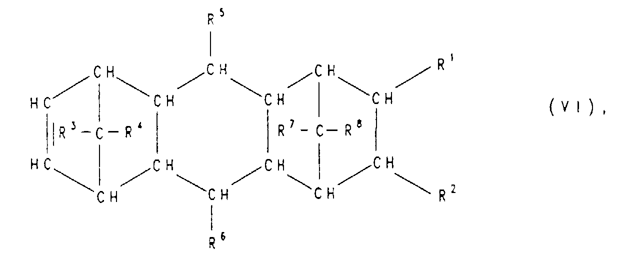 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, 0 bis 95 Gew.-%, bezogen auf die Gesamtmenge der eingesetzten Monomeren, eines Cycloolefins der Formel VII 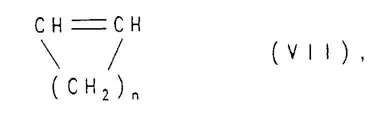 worin n eine Zahl von 2 bis 10 ist, und
0 bis 99 Gew.-%, bezogen auf die Gesamtmenge der eingesetzten Monomeren, mindestens eines acyclischen Olefins der Formel VIII 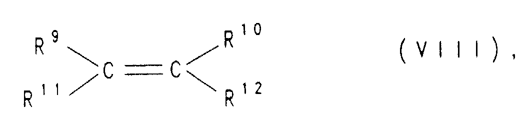 worin R⁹, R¹⁰, R¹¹ und R¹² gleich oder verschieden sind und ein Wasserstoffatom oder einen C₁-C₈-Alkylrest bedeuten, bei Temperaturen von -78 bis 150°C und einem Druck von 0,01 bis 64 bar, in Gegenwart eines Katalysators, welcher aus einem Cokatalysator und einem Metallocen der Formel XI 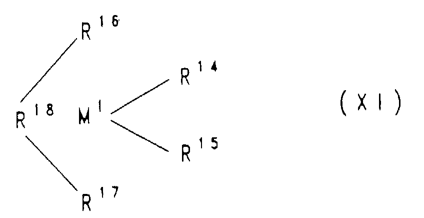 besteht, worin
- M¹: Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- R¹⁶ und R¹⁷: einen ein- oder mehrkernigen Kohlenwasserstoffrest, welcher mit dem Zentralatom M¹ eine Sandwichstruktur bilden kann, bedeuten,
- R¹⁸: 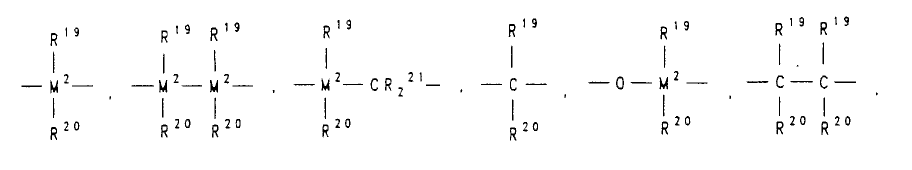 = BR¹⁹, = AlR¹⁹, -Ge-, -Sn-, -O-, -S-, = SO, =SO₂, = NR¹⁹, = CO, = PR¹⁹, oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Aralkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
- M²: Silizium, Germanium oder Zinn ist, polymerisiert und jeweils bei einer Molekulargewichtsverteilung M_{w}/Mₙ kleiner 2, immer bezogen auf den sich bildenden Polymerblock, die Reaktionsbedingungen derart verändert, daß sich das Monomer-Comonomer-Verhältnis um mindestens 10 % verändert oder zu dem Monomer oder den Monomeren ein weiteres polymerisierbares Monomer der Formeln I - VIII zudosiert wird, wobei das Verfahren in mindestens zwei Polymerisationnstuten durchgeführt wird.

Die Polymerisation wird so durchgeführt, daß je nach der Anzahl der durchgeführten Veränderungen der Parameter oder der Monomerzusammensetzung eine zwei- oder mehrstufige Polymerisation stattfindet, wobei in der ersten Polymerisationsstufe auch eine Homopolymersequenz aus einem der Monomeren der Formeln I bis VIII polymerisiert werden kann.

Dabei steht Alkyl für geradkettiges oder verzweigtes Alkyl.

Das monocyclische Olefin VII kann für die Zwecke der Erfindung auch substituiert sein (z.B. durch Alkyl- oder Arylreste).

Die erfindungsgemäß hergestellten Cycloolefinblockcopolymere sind neu und ebenfalls Gegenstand der vorliegenden Erfindung.

In der ersten Polymerisationsstufe werden reine Monomere der Formeln I bis VIII, bevorzugt Monomere der Formeln I bis VII, insbesondere der Formeln I oder III, oder Monomermischungen eingesetzt. In allen weiteren Polymerisationsstufen werden nur Monomermischungen eingesetzt.

Als Monomergemisch bei der Polymerisation werden Mischungen aus einem oder mehreren Cycloolefinen, insbesondere der Formeln I oder III, mit einem oder mehreren acyclischen Olefinen VIII oder Mischungen ausschließlich aus Cycloolefinen eingesetzt. Das Monomergemisch besteht vorteilhaft aus 2 Monomeren, bei denen es sich bevorzugt um ein polycyclisches Olefin der Formel I oder III und ein acyclisches Olefin der Formel VIII handelt.

Die Formeln I oder III stehen insbesondere für Norbornen bzw. Tetracyclododecen, wobei diese durch (C₁-C₆)-Alkyl substituiert sein können. Die Formel VIII steht bevorzugt für 1-Olefine, insbesondere für Ethylen oder Propylen.

Als erfindungsgemäße Cycloolefinblockcopolymere sind besonders Norbornen/Ethylen-Blockcopolymere und Tetracyclododecen/Ethylen-Blockcopolymere zu nennen, bei denen jede Polymersequenz bzw. jeder Polymerblock aus einem Copolymer aufgebaut ist und mindestens in einer Polymerisationsstufe auch Norbornen (im Falle von Norbornen/Ethylen-Blockcopolymeren) bzw. Tetracyclododecen (im Falle von Tetracyclododecen/Ethylen-Blockcopolymeren) eingebaut wurde. Die besonders bevorzugten Norbornen/Ethylen-Blockcopolymere sind aus Norbornen/Ethylen-Copolymersequenzen unterschiedlicher Zusammensetzung aufgebaut, d.h. sie bestehen aus Blöcken (Polymersegmenten), die jeweils Norbornen/Ethylen-Copolymere darstellen.

Der für das erfindungsgemäße Verfahren zu verwendende Katalysator besteht aus einem Cokatalysator und mindestens einem Metallocen (Übergangsmetallkomponente) der Formel XI

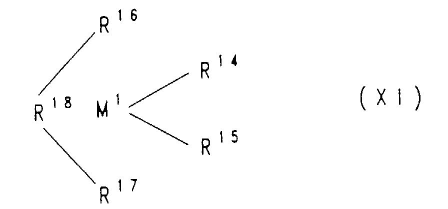

In Formel XI ist M¹ ein Metall aus der Gruppe Titan, Zirkon, Hafnium, Vanadium, Niob und Tantal, vorzugsweise Zirkon und Hafnium. Besonders bevorzugt wird Zirkon verwendet.

R¹⁴ und R¹⁵ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R¹⁶ und R¹⁷ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R¹⁶ und R¹⁷ Indenyl, Fluorenyl oder Cyclopentadienyl. Diese Reste können ein- oder mehrfach, insbesondere durch (C₁-C₄)-Alkyl, substituiert sein.

R¹⁸ ist eine ein- oder mehrgliedrige Brücke, welche die Reste R¹⁶ und R¹⁷ verknüpft und bedeutet vorzugsweise 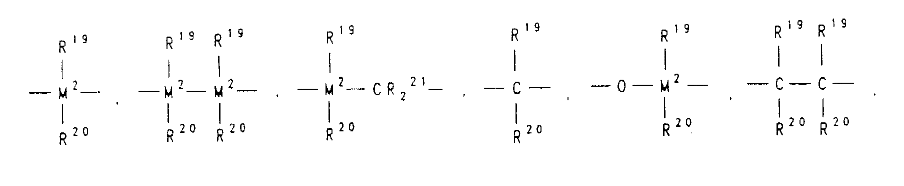 = BR¹⁹, = AIR¹⁹, -Ge-, -Sn-, -O-, -S-, = SO, = SO₂, = NR¹⁹, = CO, = PR¹⁹ oder = P(O)R¹⁹, wobei R¹⁹, R²⁰ und R²¹ gleich oder verschieden sind und ein Wasserstoffatom, ein Halogenatom, eine C₁-C₁₀-Alkylgruppe, C₁-C₁₀-Fluoralkylgruppe, Fluoralkylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, oder R¹⁹ und R²⁰ oder R¹⁹ und R²¹ bilden jeweils zusammen mit den sie verbindenden Atomen einen Ring.

M² ist Silizium, Germanium oder Zinn, bevorzugt Silizium oder Germanium.

Die Herstellung der erfindungsgemäß zu verwendenden Metallocene ist bekannt (vgl. Journal of Organometallic Chem. 288 (1985) 63-67, EP-A 320 762, EP-A 336 128, EP-A 336 127, EP-A 387 690 und EP-A 387 691).

Bevorzugt eingesetzte Metallocene sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis (1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Diphenylmethylenen-(9-fluorenyl)-cyclopentadienylzirkondichlorid,
Isopropylen-(9-fluorenyl)-cyclopentadienyl-zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid und analoge Hafnocene.

Besonders bevorzugt sind dabei:
rac-Dimethylsilyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Diphenylmethylen-(9-fluorenyl)-cyclopentadienyl-zirkondichlorid,
Isopropylen-(9-fluorenyl)-cyclopentadienyl-zirkondichlorid oder
Phenylmethylmethylen-(9-fluorenyl)-cyclopentadienyl-zirkondichlorid und analoge Hafnocene.

Erfindungsgemäß wird als Cokatalysator bevorzugt ein Aluminoxan der Formel (IX) 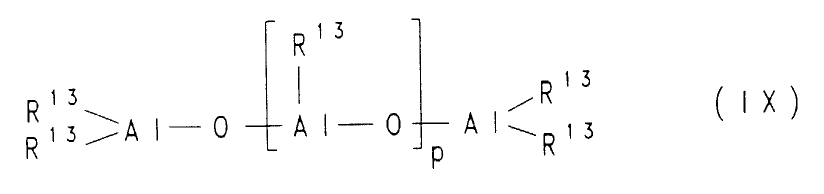 für den linearen Typ und/oder der Formel (X) 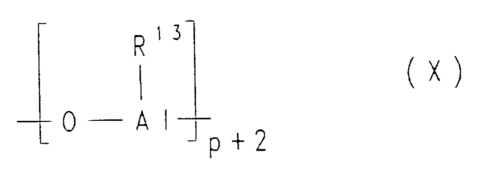 für den cyclischen Typ verwendet, wobei in den Formeln (IX) und (X) die Reste R¹³ gleich oder verschieden sein können und eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeutet.

Bevorzugt sind die Reste R¹³ gleich und bedeuten Methyl, Isobutyl, Phenyl oder Benzyl, besonders bevorzugt Methyl.

Sind die Reste R¹³ unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R¹³) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R¹³ werden entsprechend der gewünschten Zusammensetzung zwei verschiedene Aluminiumtrialkyle (AIR₃ + AIR'₃) mit Wasser umgesetzt (vgl. S. Pasynkiewicz, Polyhedron 9 (1990) 429 und EP-A 302 424).

Die genaue Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (IX) und/oder (X) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴- 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das Metallocen selbst kann auch vorpolymerisiert oder auf einen Träger aufgebracht werden oder von einem Vorpolymeren umgeben sein (z.B. aufgrund einer metallocenkatalysierten Vorpolymerisation). Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Erfindungsgemäß können an Stelle oder neben eines Aluminoxans Verbindungen der Formeln RₓNH₄₋ₓBR'₄, RₓPH₄₋ₓBR'₄, R₃CBR'₄ oder BR'₃ als geeignete Cokatalysatoren verwendet werden. In diesen Formeln bedeutet x eine Zahl von 1 bis 4, bevorzugt 3, die Reste R sind gleich oder verschieden, bevorzugt gleich, und bedeuten C₁-C₁₀-Alkyl, C₆-C₁₈-Aryl oder 2 Reste R bilden zusammen mit dem sie verbindenden Atom einen Ring, und die Reste R' sind gleich oder verschieden, bevorzugt gleich, und stehen für C₆-C₁₈-Aryl, das durch Alkyl, Haloalkyl oder Fluor substituiert sein kann.

Insbesondere steht R für Ethyl, Propyl, Butyl oder Phenyl und R' für Phenyl, Pentafluorphenyl, 3,5-Bistrifluormethylphenyl, Mesityl, Xylyl oder Tolyl (vgl. EP-A 277 003, EP-A 277 004 und EP-A 426 638).

Bei Verwendung der obengenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösungsmittels hergestellt.

Prinzipiell ist als Cokatalysator erfindungsgemäß jede Verbindung geeignet, die aufgrund ihrer Lewis-Acidität das neutrale Metallocen in ein Kation überführen und dieses stabilisieren kann ("labile Koordination"). Darüberhinaus soll der Cokatalysator bzw. das aus ihm gebildete Anion keine weiteren Reaktionen mit dem gebildeten Metallocenkation eingehen (vgl. EP-A 427 697).

Zur Entfernung von im Olefin vorhandenen Katalysatorgiften ist eine Reinigung mit einem Aluminiumalkyl, beispielsweise AlMe₃ oder AlEt₃ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Falls dem Reaktionsgemisch eine geringe Menge an Lösemittel zugesetzt wird, dann handelt es sich um gebräuchliche inerte Lösemittel wie z.B. aliphatische oder cycloaliphatische Kohlenwasserstoffe (z.B. Cyclohexan, Dekalin), Benzin- bzw. hydrierte Dieselölfraktionen oder Toluol.

Die Polymerisation findet in verdünnter Lösung (<80 Vol.-% Cycloolefin), in konzentrierter Lösung (>80 Vol.-% Cycloolefin) oder direkt im flüssigen unverdünnten Cycloolefinmonomer statt.

Je nach der Aktivität des Katalysators, dem gewünschten Molekulargewicht und der gewünschten Molekulargewichtsverteilung des jeweiligen Polymerblocks müssen Temperatur und Reaktionszeit entsprechend abgestimmt werden. Auch die Konzentration der Monomeren wie auch die Art des Lösungsmittels müssen dabei berücksichtigt werden, zumal diese Parameter wesentlich die relativen Einbauraten der Monomeren bestimmen und somit entscheidend für Glastemperatur bzw. thermische Formbeständigkeit der Polymere sind.

Je tiefer die Polymerisationstemperatur innerhalb des Bereiches von -78 bis 150°C gewählt wird, vorzugsweise zwischen -78 und 80°C und besonders bevorzugt zwischen 20 und 80°C, um so länger kann die Polymerisationsdauer bei nahezu gleicher Breite der Molekulargewichtsverteilung M_{w}/Mₙ für die jeweiligen Polymerblöcke sein.

Findet die plötzliche Veränderung der Reaktionsbedingungen zu einem Zeitpunkt statt, bei dem die Molekulargewichtsverteilung M_{w}/Mₙ des sich bildenden Polymerblocks gleich 1 ist, so kann mit Sicherheit davon ausgegangen werden, daß alle in dieser Polymerisationsstufe gebildeten Polymerblöcke ein katalysator-aktives Kettenende besitzen (d.h. es sind sogenannte lebende Polymerketten) und somit durch Veränderung der Polymerisationsbedingungen ein weiterer Block an diese Kettenenden anpolymerisiert werden kann. Die Ankopplung ist für diesen extremen Fall 100 %. Je mehr die Molekulargewichtsverteilung M_{w}/Mₙ der in einer Polymerisationsstufe gebildeten Polymerblöcke von 1 abweicht, d.h. M_{w}/Mₙ >1, um so mehr nimmt die Zahl der katalysator-inaktiven Kettenenden (d.h. sogenannte tote Kettenenden oder abgebrochene Ketten) zu, die zu einer Ankopplung eines weiteren Blocks nicht mehr fähig sind.

Für das erfindungsgemäße Verfahren zur Herstellung von Blockcopolymeren bedeutet dies, daß je mehr sich M_{w}/Mₙ des in der Polymerisationsstufe X hergestellten Polymerblocks X zu dem Zeitpunkt, in dem die Änderung der Reaktionsparameter erfolgt, in der Nähe des Wertes 1 befindet, umso größer wird der Anteil von Blockpolymerketten im fertigen Produkt, bei denen eine chemische Ankopplung zwischen Block X und Block X + 1 realisiert wurde.

Bezogen auf die strukturelle Einheitlichkeit bzw. Reinheit der Cycloolefinblockcopolymere bedeutet das, daß die Zeitfenster für die einzelnen Polymerisationsstufen möglichst so gewählt werden sollten, daß sie einem M_{w}/Mₙ der entsprechenden Polymerblöcke von nahezu 1 entsprechen, um Cycloolefinblockcopolymere hoher Reinheit und hoher struktureller Einheitlichkeit zu erhalten.

Möchte man auch ein bestimmtes Molekulargewicht eines Polymerblocks ansteuern, so muß die Reaktionsdauer auch auf das gewünschte Molekulargewicht eingestellt werden.

Die Bestimmung der erforderlichen Reaktionszeit bis zur Änderung der Reaktionsbedingungen, die in Abhängigkeit von den genannten Reaktionsparametern und der Cycloolefineinbaurate variiert, erfolgt über eine Eichung durch einfache Probennahme wie in den Ausführungsbeispielen beschrieben. Aus Versuchsreihen können Diagramme erstellt werden, aus denen dann die erforderlichen Zeiten entnommen (vorbestimmt) werden können.

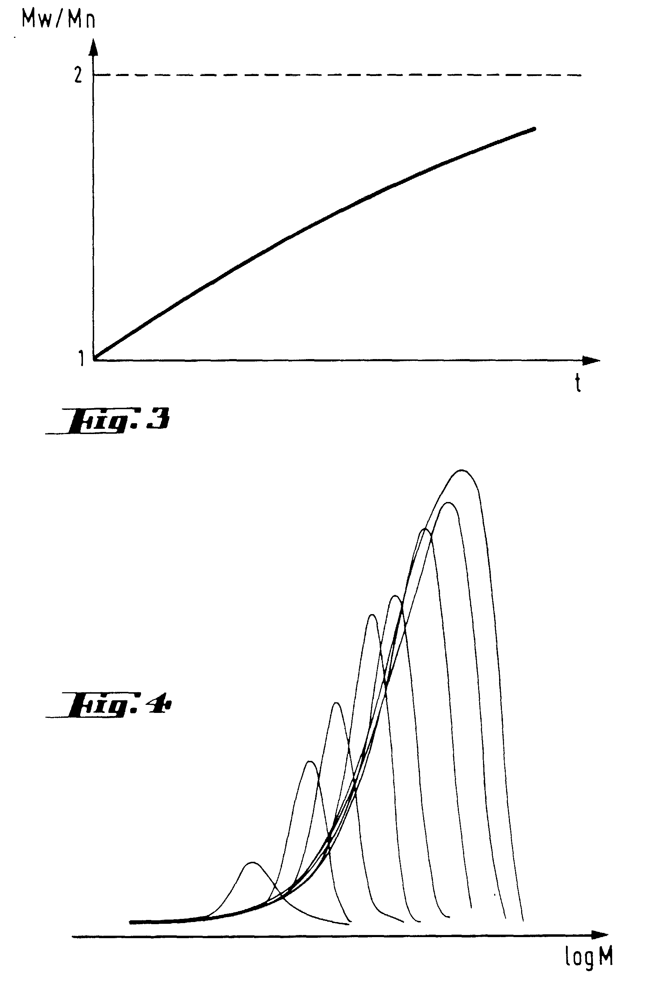

Ein solches Diagramm ist beispielsweise die Fig. 3, die allgemein die Abhängigkeit der Molekulargewichtsverteilung M_{w}/Mₙ eines Polymerblocks von der Reaktionszeit t zeigt.

Mit Ausnahme der ersten Polymerisationsstufe eines diskontinuierlichen Verfahrens, muß die Eichung zur Bestimmung der Reaktionszeit für alle Polymerisationsstufen diskontinuierlicher und kontinuierlicher Verfahren in separaten einstufigen Versuchen vorgenommen werden, bei denen - ausgenommen die Reaktionszeit - die jeweiligen Reaktionsbedingungen der entsprechenden Polymerisationsstufe verwendet werden.

Zum Zeitpunkt der Veränderung der Reaktionsbedingungen wird dann im Falle einer Copolymersationsstufe entsprechend das molare Monomerverhältnis im Reaktionsmedium zwischen Cycloolefinen und acyclischen Olefinen oder zwischen einem Cycloolefin und den anderen Cycloolefinen, wenn keine acyclischen Olefine verwendet werden, verändert. Die Veränderung des Monomerverhältnisses sollte mindestens 10 % ausmachen, bevorzugt mehr als 25 %.

Wenn die erste Polymerisationsstufe eine Homopolymerisation (z.B. Polymerisation von Norbornen) ist, kommt zum Zeitpunkt der Veränderung mindestens noch ein zweites Monomer in den Reaktionsraum.

Während einer Polymerisationsstufe, bzw. der Bildung eines Polymerblocks, werden die Monomerverhältnisse in dem Reaktionsraum in der Regel konstant gehalten, so daß chemisch einheitliche Polymerblöcke entstehen. Es ist nun aber auch möglich, während einer Polymerisationsstufe die Monomerverhältnisse kontinuierlich zu verändern, was dann zu Polymerblöcken führt, die entlang der Polymerkette einen strukturellen Gradienten aufweisen, d.h. daß sich das Einbauverhältnis (z.B. das Verhältnis zwischen der Anzahl von Norbornenbausteinen und der von Ethylenbausteinen in einem Teil des Polymerblocks) entlang des entsprechenden Polymerblocks kontinuierlich verändert. Bei Polymerblöcken, die aus mehr als zwei Monomerarten aufgebaut werden, kann dieser Gradient durch die kontinuierliche Veränderung der Konzentration einer einzigen Monomerkomponente erzielt werden. Blöcke mit strukturellen Gradienten sind auch in solchen Polymerisationsstufen zu erzeugen, in denen die Konzentration mehrerer Monomerkomponenten gleichzeitig kontinuierlich verändert wird. Die daraus resultierenden Blockcopolymere sind ebenfalls von Interesse und Gegenstand der vorliegenden Erfindung.

Die beim erfindungsgemäßen Verfahren vorzunehmenden Veränderungen der Monomerverhältnisse können z.B. durch Veränderung des Druckes des acyclischen Olefins, durch eine Veränderung der Temperatur und damit der Löslichkeit gasförmiger Olefine, durch Verdünnung mit Lösungsmittel bei konstantem Druck des acyclischen Olefins oder auch durch das Zudosieren eines flüssigen Monomers erreicht werden. Auch können mehrere der genannten Parameter gleichzeitig geändert werden.

Solche plötzlichen wie auch kontinuierlichen Veränderungen des Monomerverhältnisses - und damit die Herstellung von erfindungsgemäßen Blockcopolymeren - können sowohl bei einer diskontinuierlichen Reaktionsführung wie auch bei einer kontinuierlichen Reaktionsführung realisiert werden.

Besonders vorteilhaft sind kontinuierliche sowie mehrstufige Polymerisationsverfahren, weil sie einen ökonomisch günstigen Einsatz des Cycloolefins ermöglichen. Auch läßt sich bei kontinuierlichen Verfahren das cyclische Olefin, welches als Restmonomer zusammen mit dem Polymeren anfallen kann, zurückgewinnen und wieder dem Reaktionsgemisch zuführen.

Bei einer solchen Polymerisationsführung kann die Blocklänge über Durchsatz und Reaktionsvolumen der unterschiedlichen Reaktionsgefäße gesteuert werden (d.h. diese beiden Größen bestimmen die Verweilzeit an den unterschiedlichen Reaktionsorten).

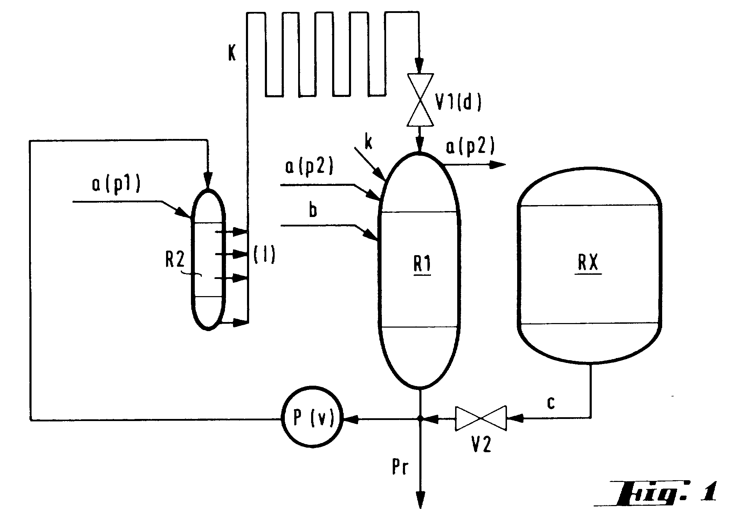

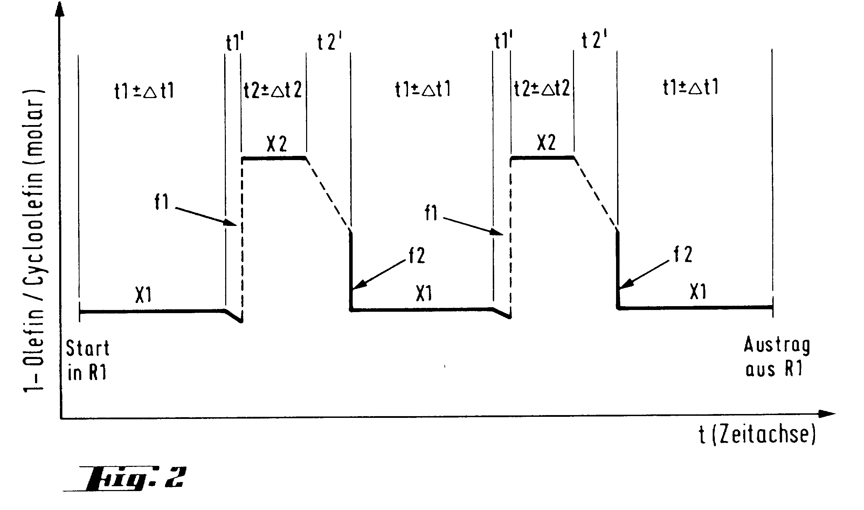

Ein Beispiel für ein solches Verfahren ist schematisch durch die Figuren 1 und 2 wiedergegeben. Dabei zeigt Figur 1 einen möglichen Aufbau für eine einfache kontinuierliche Verfahrensweise, die bei Bedarf um weitere Elemente (Reaktionsgefäße etc.) erweitert werden kann. Es bedeuten:
- Parameter:: Drucke p1 und p2, p1>>p2; Durchsatz v; Drosselung d; Niveaueinstellung l;
- Teile:: Rührgefäße R; Pumpe P; Rohrreaktor K; Ventile V
- a: = gasförmiges Olefin oder Olefingemisch;
- b: = Cycloolefin o.-lösung; Cycloolefingemisch o.-Lösung;
- c: = Polymerlösung;
- k: = Katalysator;
- Pr: = Produkt.

Figur 2 gibt ein Beispiel für das Veränderungsprofil der Reaktionsbedingungen, die das reagierende Kettenende einer erfindungsgemäßen Blockcopolymerkette erfahren kann, bei einem angenommenen zweimaligen Durchlauf des kontinuierlichen Reaktionskreislaufes, der in Figur 1 schematisch dargestellt wird, wobei Start und Austrag der Kette im Reaktorraum R1 stattfinden.

Es bedeuten:
- X1: = Cycloolefin/1-Olefin-Verhältnis in Reaktionsraum R1
- X2: = Cycloolefin/1-Olefin-Verhältnis in Reaktionsraum R2
- t1 ± Δt1: = Verweilzeit im Reaktionsraum R1
- t2 ± Δt2: = Verweilzeit im Reaktionsraum R2
- ± Δ: = Hinweis, daß eine Verweilzeitverteilung vorliegt und daher diese Zeiten statistisch um einen Mittelwert schwanken
- t1';t2': = Verweilzeit in den Rohren zwischen R1 und R2 bzw. R2 und R1 (im Vergleich zu R1 und R2 sind die Verweilzeitenverteilungen in diesen Rohrleitungen eng und daher wurde hier auf den Hinweis "Δt" verzichtet; gewöhnlich ist die Einbaurate des 1-Olefins größer als die des Cycloolefins, was dann zu einer leichten Veränderung des Monomerverhältnisses zu Gunsten des Cycloolefins führt)
- f1;f2: = rel. plötzliche Veränderung des Monomerverhältnisses beim Eintritt in den Reaktionsraum R2 bzw. R1
Eine Anlage gemäß Figur 1 kann sowohl kontinuierlich, d.h. durch permanentes Umpumpen der Reaktionslösung bzw. permanentes Zudosieren der Monomeren und Austragen der Produktlösung, als auch diskontinuierlich durch schubweises Umpumpen der gesamten Reaktionslösung von Reaktor zu Reaktor betrieben werden.

Die diskontinuierliche Variante hat den Vorteil, daß sowohl Blocklänge wie auch die Anzahl der Blöcke je Polymerkette genau eingestellt werden können. Bei der kontinuierlichen Fahrweise kann man die Blocklänge genau steuern, während die Anzahl der Blöcke als statistisches Mittel über das erzielte mittlere Molgewicht des Blockcopolymeren und das angesteuerte mittlere Molgewicht der Polymerblöcke zugänglich bzw. einstellbar ist. Die Herstellung von Blockcopolymeren mit bestimmten Blockkettenenden ist mit der diskontinuierlichen Fahrweise recht genau zu realisieren, während das kontinuierliche Verfahren nur eine statistische Aussage diesbezüglich ermöglicht.

Daraus ergibt sich, daß die beschriebene Änderung der Reaktionsbedingungen (-parameter) einmal oder mehrmals vorgenommen werden kann, was zu einer Abfolge von zwei oder mehreren verschiedenen Blöcken innerhalb einer Polymerkette führt. Die dabei einzig einzuhaltende Bedingung ist, daß man den jeweiligen Reaktionsstart für die Bildung eines neuen Blockes so wählt, daß dieser zu einem Zeitpunkt erfolgt in dem - gemäß der Eichung - die Molekulargewichtsverteilung M_{w}/Mₙ des wachsenden Polymerblocks noch <2, bevorzugt nahezu 1, ist. Hält man diese Bedingung ein, so kann immer ein neuer Block mit neuer Zusammensetzung an die wachsende Polymerkette anpolymerisiert werden. Diese Reaktionszeiten schwanken in Abhängigkeit von verwendetem Katalysatorsystem, Reaktionstemperatur und Monomerenkonzentration.

Soll kein neuer Block mehr anpolymerisiert werden, so wird die Polymerisation unter den zuletzt gewählten Reaktionsbedingungen zu Ende geführt, d.h. ausgetragen bzw. abgebrochen.

Eine diskontinuierliche Fahrweise kann auch in einem Reaktionsgefäß realisiert werden, indem die Veränderung der Reaktionsbedingungen und Abbruch der Reaktion nacheinander in einem Reaktor erfolgen.

Allgemein gilt für die Reaktionsparameter folgendes:
Wenn reines offenkettiges Olefin beispielsweise Ethylen aufgedrückt wird, werden Drucke zwischen 0,01 und 64 bar eingesetzt, bevorzugt 2 bis 40 bar und besonders bevorzugt 4 bis 20 bar. Wird neben dem offenkettigen Olefin auch ein inertes Gas, z.B. Stickstoff oder Argon aufgedrückt, so liegt der Gesamtdruck im Reaktionsgefäß bei 4 bis 64 bar, bevorzugt bei 2 bis 40 bar und besonders bevorzugt bei 4 bis 25 bar. Falls die cycloolefinische Komponente unverdünnt vorliegt, wird auch bei hohen Drucken eine hohe Cycloolefineinbaurate erreicht.

Die Metallocenverbindung wird in einer Konzentration bezogen auf das Übergangsmetall von 10⁻¹ bis 10⁻⁸, vorzugsweise 10⁻³ bis 10⁻⁶ mol Übergangsmetall pro dm³ Reaktorvolumen angewendet. Das Aluminoxan wird in einer Konzentration von 10⁻⁵ bis 10⁻¹, vorzugsweise 10⁻⁴ bis 2 x 10⁻² mol pro dm³ Reaktorvolumen verwendet, bezogen auf den Gehalt an Aluminium. Prinzipiell sind aber auch höhere Konzentrationen möglich. Die anderen genannten Cokatalysatoren werden bevorzugt in etwa äquimolaren Mengen zum Metallocen eingesetzt.

Außer den genannten, verbrückten Metallocenen sind grundsätzlich auch Metallocene mit gleichen bzw. ähnlichen, unverbrückten Liganden einsetzbar. Bei diesen Metallocenen müssen unter vergleichbaren Reaktionsbedingungen deutlich kürzere Reaktionszeiten als bei den verbrückten Metallocenen gewählt werden.

Bei der Herstellung von Copolymerisaten kann die Variation der Molverhältnisse des polycyclischen Olefins zum (bevorzugt) eingesetzten offenkettigen Olefin in einem weiten Bereich erfolgen. Bevorzugt werden molare Verhältnisse von 50:1 bis 1:50, insbesondere 20:1 bis 1:20, Cycloolefin zu offenkettigem Olefin eingestellt.

Die erfindungsgemäßen Cycloolefinblockcopolymeren führen zu günstigen mechanischen Eigenschaftskombinationen in Legierungen mit anderen Cycloolefincopolymeren.

Die nachfolgenden Beispiele sollen die Erfindung näher erläutern:

### Beispiel 1

Ein sauberer und trockener 1,5-dm³-Polymerisationsreaktor mit Rührer wurde mit Stickstoff und dann mit Ethylen gespült und mit 576 ml einer 85 volumenprozentigen toluolischen Norbornenlösung gefüllt.

Unter Rühren wurde dann der Reaktor auf einer Temperatur von 20 °C gehalten und 2 bar Ethylen (Überdruck) aufgedrückt.

Danach wurden 20 cm³ toluolische Methylaluminoxanlösung (MAO-Lsg.) (10,1 Gew.-% Methylaluminoxan mit Molmasse 1300 g/mol nach kryoskopischer Bestimmung) in den Reaktor dosiert und die Mischung 15 min bei 20 °C gerührt, wobei durch Nachdosieren der Ethylendruck bei 2 bar gehalten wurde. Parallel dazu wurden 60 mg rac-Dimethylsilyl-bis-(1-indenyl)-zirkondichlorid in 10 cm³ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann bei 20 °C polymerisiert, wobei der Ethylendruck durch Nachdosieren bei 2 bar gehalten wurde.

Nach 30 min wurden über eine Schleuse 50 ml der Reaktionslösung entnommen. Unmittelbar nach dieser Probeentnahme wurde der Ethylendruck innerhalb von 10 sec auf 7 bar angehoben und durch Nachdosieren auf diesem Druck 5 min gehalten. Dann wurde die Polymerisation durch Zugabe von 10 ml Wasser über eine Schleuse gestoppt. Nach anschließender Entspannung wurde die Reaktionslösung in ein Gefäß abgelassen und dann in 2 dm³ Aceton eingetropft, 10 min gerührt und der suspendierte, polymere Feststoff abfiltriert.

Es wurden 20 g Polymer erhalten mit einer Glastemperatur von 140 °C und einer Viskositätszahl von 95 ml/g und einer Molekulargewichtsverteilung M_{w}/Mₙ = 1,5.

Die 50 ml Probe wurden nach Entnahme unter Rühren mit 0,5 ml Wasser versetzt und anschließend analog der o. g. Aufarbeitung der Reaktionslösung des Endproduktes aufgearbeitet. Aus der 50 ml Probe wurden 4,5 g Polymer mit einer Glastemperatur von 165 °C, einer Viskositätszahl von 150 ml/g und einer Molekulargewichtsverteilung M_{w}/Mₙ = 1,3 isoliert.

### Beispiele 2 - 4

Es wurde analog Beispiel 1 verfahren, wobei abweichend davon die Bedingungen aus Tabelle 1 gewählt wurden. Die erhaltenen Polymereigenschaften sind in Tabelle 2 zusammengefaßt.

**Tabelle 1**

| Beisp. Nr. | Konzentr. Nb-Lösung. (Vol.-%) | 1. Polym.-Stufe | | 2. Polym.-Stufe | | Menge Metallocen (mg) |
|---|---|---|---|---|---|---|
| | | Zeit (Min.) | Et-Druck (bar) | Zeit (Min.) | Et-Druck (bar | |
| 2 | 24,4 | 30 | 1 | 15 | 7 | 60,3 |
| 3 | 24,4 | 30 | 1 | 10 | 7 | 92,2 |
| 4 | 48,8 | 30 | 2 | 2 | 8 | 89,9 |
| Nb = Norbornen | | | | | | |

**Tabelle 2**

| Beisp. Nr. | Probe | | | Endprodukt | | |
|---|---|---|---|---|---|---|
| | Vz (ml/g) | Tg (°C) | M_{w}/M n | Vz (ml/g) | Tg (°C) | M_{w}/Mₙ |
| 2 | 22 | 167 | 1,2 | 108 | 98 | 1,2 |
| 3 | 27,5 | 165 | 1,2 | 192 | 81 | 1,6 |
| 4 | 73 | 173 | 1,2 | 107 | 134 | 1,3 |

### Beispiel 5

Eine kinetische Untersuchung wurde analog Beispiel 1 durchgeführt. Es wurden 860 cm³ einer 85 volumenprozentigen toluolischen Norbornenlösung zur Polymersiation eingesetzt. Die Reaktortemperatur betrug 24°C und der Ethylenüberdruck wurde bei 6 bar konstant gehalten. Es wurden 60 cm³ toluolische MAO-Lösung (10,1 gew.-%ig) zugegeben und 15 Min. gerührt. Es wurden 21 mg rac-Dimethylsilyl-bis-(1-indenyl)-zirkondichlorid in 20 cm³ MAO-Lösung gegeben und nach der Voraktivierung in den Reaktor gedrückt.

Über eine Schleuse wurden zu den in Tabelle 3 angegebenen Reaktionszeiten Proben (50 cm³) entnommen. Die Polymerisation wurde sofort durch Zugabe von 4 cm³ iso-Propanol gestoppt. Es wurde mehrmals mit Aceton und verdünnter Salzsäure gewaschen (siehe Beispiel 1).

Die erhaltenen polymeren Produkte wurden per Gelpermeationschromatographie vermessen. Zahlenmittel (Mₙ) und Gewichtsmittel (M_{w}) des Molekulargewichtes sowie die Uneinheitlichkeit (M_{w}/Mₙ) sind in Tabelle 3 aufgeführt. Die Verteilungskurven aller Proben sind in Fig. 4 dargestellt.

**Tabelle 3**

| Probe Nr. | Reaktionszeit/Min. | Mₙ x 10⁻³g/Mol | M_{w} x 10⁻³g/Mol | M_{w}/Mₙ |
|---|---|---|---|---|
| 1 | 10 | 21,8 | 24,4 | 1,10 |
| 2 | 20 | 37,3 | 42,8 | 1,15 |
| 3 | 30 | 51,0 | 62,0 | 1,22 |
| 4 | 45 | 73,0 | 92,0 | 1,25 |
| 5 | 60 | 83,0 | 121,0 | 1,46 |
| 6 | 90 | 110,0 | 167,0 | 1,52 |
| 7 | 120 | 125,0 | 217,0 | 1,74 |
| 8 | 150 | 153,0 | 261,0 | 1,71 |

Fig. 4 stellt die gelpermeationschromatographisch erhaltenen Molekulargewichtsverteilungsfunktionen der Proben Nr. 1 - 8 aus Beispiel 5 von links nach rechts mit steigendem Molekulargewicht und zunehmender Reaktionszeit dar. Reaktionszeit und mittlere Molekulargewichte (Mₙ, M_{w}) sind in Tabelle 3 aufgeführt.

Die Fläche der Verteilungsfunktion in Fig. 4 ist mit der Ausbeute gewichtet.

GPC-Messungen (Gel-Permeations-Chromatography) wurden wie folgt durchgeführt. Es wurden ein Chromatograph vom Typ 150-C ALC/GPC Millipore Waters Chrom. und ein Säulensatz bestehend aus 4 Shodex-Säulen vom Typ AT-80 M/S verwendet. Das Lösungsmittel war o-Dichlorbenzol.

Weitere Parameter der Messung waren:

| | |
|---|---|
| Temperatur | 135°C |
| Durchfluß | 0,5 ml/min |
| Probenmenge | 0,4 ml Probenlösung |
| Konzentration der Probenlösung | 0,1 g/dl |
| Kalibrierung | nach Polyethylenstandard |

### Beispiel 6

Es wurde analog Beispiel 1 verfahren, wobei abweichend davon folgende Bedingungen gewählt wurden:
- Cycloolefin = Tetracyclododecen
- Konzentration der Cycloolefinlösung = 127 g/l
- Menge Cycloolefinlösung = 860 ml
- Menge MAO-Lsg. = 100 ml
- Metallocen = rac-Dimethylsilyl-bis-(1-indenyl)-zirkondichlorid
- Menge Metallocen = 62 mg
- durch Nachdosieren gehaltener Ethylendruck = 3 bar
- Zeitpunkt der Probeentnahme = nach 20 min
- es wurde durch Zugabe reinen Cycloolefins über eine Schleuse die Cycloolefinkonzentration verändert.
- Dauer des Zugabevorgangs = 2 sec
- Menge zudosierten Cycloolefins = 170 g
- Ethylendruck nach Zugabe = 3 bar
- Dauer der Polymerisation nach Zudosierung = 30 min

Die erhaltenen Polymere zeichnen sich aus durch:
- Menge erhaltenes Endprodukt = 17,5 g
- Menge Polymer aus Probe = 390 mg
- Glastemperatur des Endprodukts = 125 °C
- Glastemperatur des Polymers aus Probe = 110 °C
- Molekulargewicht Mn des Enprodukts = 72000 g/Mol
- Molekulargewicht Mn des Polymers aus Probe = 52000 g/Mol
- Viskositätszahl des Endprodukts = 105 ml/g
- Viskositätszahl des Polymer aus Probe = 66 ml/g
- Molekulargewichtsverteilung Mw/Mn des Endprodukts = 1,9
- Molekulargewichtsverteilung Mw/Mn des Polymers aus Probe = 1,4

### Vergleichsbeispiel 1 (Vergleichsbeispiel zu Beispiel 6)

Es wurde gemäß Beispiel 6 verfahren, wobei abweichend davon die Zugabe des reinen Cycloolefins schon vor der Zugabe des Metallocens und damit vor Beginn der Polymerisation erfolgte. Nach 3 Stunden wurde die Polymerisation abgebrochen. Das erhaltene Endprodukt zeichnet sich durch folgende Merkmale aus:
- Glastemperatur = 151 °C
- Viskositätszahl = 84 ml/g

### Beispiel 7

In einer Anlage entsprechend der in Fig. 1 wurden Polymerisationsversuche durchgeführt. Die Anlage kennzeichnete sich durch folgende Merkmale:
- R1 hat ein Volumen von 80 l
- R2 besteht aus einem Rohr in dem statische Mischelemente fixiert sind
- R2 hat ein Volumen von 200 ml
- K ist ein Kühlrohr mit einem Volumen von 15 l
- P ist eine Zahnradpumpe

Die Polymerisation wurde gemäß folgendem Konzept durchgeführt:
- eine toluolische Cycloolefinlösung wurde in R1 vorgelegt;
- der Umpump wurde mit der Pumpe gemäß einer Eichung mit konstantem Durchfluß gefahren;
- das gasförmige Olefin wurde mit Überdruck unmittelbar vor dem statischen Mischer in Umlaufstrom eingebracht;
- im Reaktor R1 der Druck durch eine kontrollierte Gasableitung konstant gehalten.

Es wurden folgende Polymerisationsbedingungen eingehalten:
- Cycloolefin: Norbornen
- gasförmiges Olefin: Ethylen
- Metallocen: Diphenylmethylen-(9-fluorenyl)-cyclopentadienyzirkondichlorid
- Menge vorgelegtes Norbornen (flüssig) = 10 l
- Menge vorgelegtes Toluol = 30 l
- Menge vorgelegter MAO-Lösung (MAO-Lösg. gemäß Beispiel 1) = 1000 ml
- Menge Metallocen (Katalysatorvorbereitung gemäß Beispiel 1) = 200 mg
- Etylenüberdruck während der Polymerisation auf der Ethylenleitung = 11 bar
- Druck in R2 unmittelbar hinter den statischen Mischelementen = 10,5 bar
- Druck in R1 während der Polymerisation = 2,5 bar
- Umlaufstrom während der Polymerisation = 1500 l/h
- Polymerisationstemperatur: in R1 = 40 °C
   in R2 = 43 °C

Nach dem Start der Polymerisation durch Zugabe des Katalysators über eine Schleuse wurden regelmäßig Proben an der Stelle der Anlage entnommen, die mit Pr in Fig. 1 gekennzeichnet ist. Die Polymerisation wurde nach 50 Minuten abgebrochen. Die Aufarbeitung der Proben wie auch des Endprodukts erfolgte analog zu Beispiel 1.

An Proben und Endprodukt wurden folgende Eigenschaften bestimmt:
- 900 ml-Probe nach 10 Minuten:
   - Polymermenge = 0,5 g
   - Glastemperatur = 140 °C
   - Viskositätszahl = 62 ml/g
- 600 ml- Probe nach 20 Minuten:
   - Polymermenge = 1,4 g
   - Glastemperatur = 137 °C
   - Viskositätszahl = 109 ml/g
- Endprodukt nach 50 Minuten:
   - Polymermenge = 15 g in 1 l Polymerisationslösung
   - Glastemperatur = 134 °C
   - Viskositätszahl = 160 ml/g

### Beispiel 8

Zwei Polymerlegierungen wurden durch Mischen von 5 %-igen toluolischen Lösungen der Komponenten, anschließendes Ausfällen in Aceton und Trocknen des gefällten Pulvers hergestellt. Dabei wurden folgende Zusammensetzungen gewählt:
Legierung I: 3 Teile Komponente A + 3 Teile Komponente B + 1 Teil Komponente C
Legierung II: 3 Teile Komponente A + 3 Teile Komponente B

Komponente A ist ein einstufig polymerisiertes Norbornen-Ethylen-Copolymer mit Glastemperatur = 102 °C und einer Viskositätszahl von 52 ml/g. Bei seiner Polymerisation wurde Diphenylmethyl-(9-fluorenyl)-cyclopentadienylzirkondichlorid als Katalysator verwendet.

Komponente B ist ein einstufig polymerisiertes Norbornen- Ethylen-Copolymer mit Glastemperatur = 178 °C und einer Viskositätszahl von 48 ml/g. Bei seiner Polymerisation wurde Diphenylmethyl-(9-fluorenyl)-cyclopentadienylzirkondichlorid als Katalysator verwendet.

Komponente C ist ein Blockcopolymer, welches nach einem Verfahren gemäß Beispiel 1 hergestellt wurde, wobei abweichend davon folgende Bedingungen gewählt wurden:
- Menge Norbornenlösung = 860 ml
- Menge MAO-Lsg. = 60 ml
- Metallocen = Diphenylmethylen-(9-fluorenyl)-cyclopentadienylzirkondichlorid
- Menge Metallocen = 20 mg
- durch Nachdosieren gehaltener Ethylendruck = 6 bar
- Zeitpunkt der Probeentnahme = nach 25 min
- Zeit, in der Änderung des Ethylendrucks erfolgte = 20 sec
- zweiter durch Nachdosiern gehaltener Ethylendruck = 12 bar
- Dauer der Polymerisation bei zweitem Ethylendruck = 2,5 min

Die erhaltenen Polymere zeichnen sich aus durch:
- Menge erhaltenes Endprodukt = 13,5 g
- Menge Polymer aus Probe = 370 mg
- Glastemperatur des Endprodukts = 126 °C
- Glastemperatur des Polymers aus Probe = 143 °C
- Molekulargewicht Mn des Enprodukts = 155000 g/Mol
- Molekulargewicht Mn des Polymers aus Probe = 90000 g/Mol
- Viskositätszahl des Endprodukts = 176 ml/g
- Viskositätszahl des Polymer aus Probe = 114 ml/g
- Molekulargewichtsverteilung Mw/Mn des Endprodukts = 1,8
- Molekulargewichtsverteilung Mw/Mn des Polymers aus Probe = 1,3
Nach 18 Stunden trocknen bei 80 °C im Trockenschrank wurden aus beiden Legierungen Pressplatten bei 240 °C, 100 bar Pressdruck und einer Pressdauer von 15 Minuten hergestellt. Die Platten haben einen Durchmesser von 60 mm und eine Dicke von 1 mm. Aus diesen Platten wurden Proben entnommen, die zur Bestimmung der Glastemperatur verwendet wurden.

Es wurden folgende Glastemperaturen gemessen:
Legierung I:
   1. Glastemperatur = 121 °C
   2. Glastemperatur = 163 °C
Legierung II:
   1. Glastemperatur = 105 °C
   2. Glastemperatur = 165 °C

Wie die Glastemperaturen belegen, sind beide Legierungen zweiphasig. Die Erhöhung der 1. Glastemperatur bei Legierung I gegenüber der 1. Glastemperatur bei Legierung II zeigt offensichtlich, daß die entsprechende Phase durch Zugabe des Blockcopolymers der Phase, die durch die 2. Glastemperatur gekennzeichnet ist, deutlich angenähert wird, d. h., die beiden Phasen werden verträglicher.

### Beispiel 9

Es wurde analog Beispiel 8 verfahren, wobei die Komponenten mit rac-Dimethylsilyl-bis-(1-indenyl)-zirkondichlorid polymerisiert wurden. Abweichend von Beispiel 8 gelten folgende Charakteristika:
- Komponente A: Glastemperatur = 75 °C
   Viskositätszahl = 97 ml/g
- Komponente B: Glastemperatur = 165 °C
   Viskositätszahl = 58 ml/g
- Komponente C ist ein gemäß Beispiel 2 hergestelltes Blockcopolymer.
- Legierung I weist eine einzige Glastemperatur von 108 °C auf.
- Legierung II:
   1. Glastemperatur = 88 °C
   2. Glastemperatur = 142 °C

### Beispiel 10

Es wurde analog Beispiel 8 verfahren, wobei die Komponenten mit rac-Dimethylsilyl-bis-(1-indenyl)-zirkondichlorid polymerisiert wurden. Abweichend von Beispiel 8 gelten folgende Charakteristika:
- Legierung I : 5 Teile Komponente A + 12 Teile Komponente B + 3 Teil Komponente C
- Legierung II: 5 Teile Komponente A + 12 Teile Komponente B
- Komponente A: Glastemperatur = 15 °C
   Viskositätszahl = 145 ml/g
- Komponente B: Glastemperatur = 179 °C
   Viskositätszahl = 112 ml/g
- Komponente C ist ein gemäß Beispiel 2 hergestelltes Blockcopolymer, wobei abweichend davon folgende Angaben gelten:
   - Zeit der 2. Polym.-Stufe = 3 Min.
   - Et-Druck der 2. Polym.-Stufe = 14 bar
   - Vz des Endprodukts = 180 ml/g
   - Das Endprodukt hat zwei Glastemperaturen:
      1. Glastemperatur = 48 °C
      2. Glastemperatur = 148 °C
   - Mw/Mn des Endprodukts = 1,9
- Legierung I:
   1. Glastemperatur = 30 °C
   2. Glastemperatur = 156 °C
- Legierung II:
   1. Glastemperatur = 18 °C
   2. Glastemperatur = 173 °C
Während die Pressplatte aus Legierung I eine transluzentes Erscheinungsbild hatten, waren die Pressplatten aus Legierung II opak.

Aus einem weiteren Teil der hergestellten Legierungen wurden Schulterstäbe für die mechanische Ausprüfung angefertigt.
Eine nach ISO 180/A durchgeführte Bestimmung der Kerbschlagzähigkeit an den entsprechenden Schulterstäben ergab folgende Werte bei einer Prüftemperatur von 60 °C:
Legierung I : 6,3 kJ/m²
Legierung II: 4,2 kJ/m²

## Patentansprüche

1. Verfahren zur Herstellung eines Cycloolefinblockcopolymers, dadurch gekennzeichnet, daß man 0,1 bis 95 Gew.-%, bezogen auf die Gesamtmenge der eingesetzten Monomeren, mindestens eines Monomers der Formeln I, II, III, IV, V oder VI 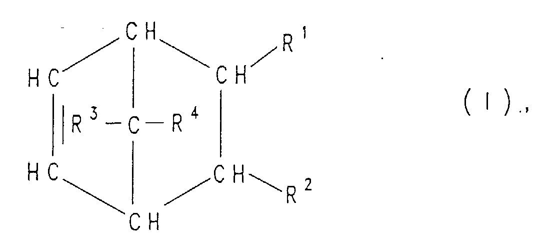 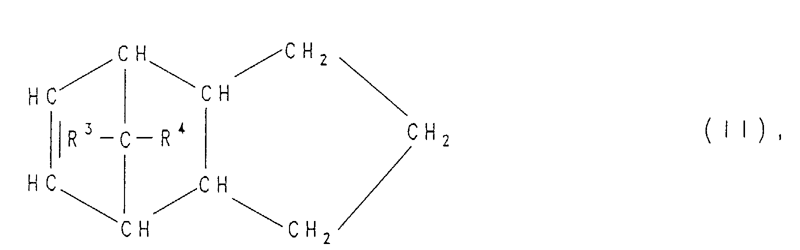 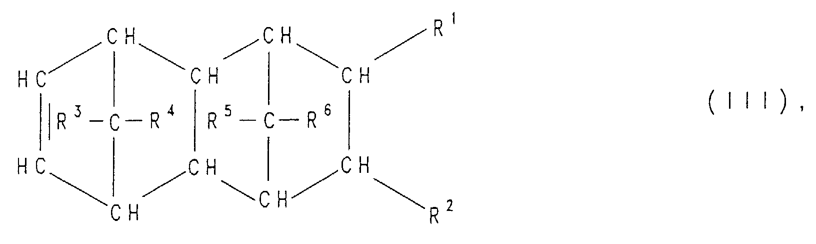 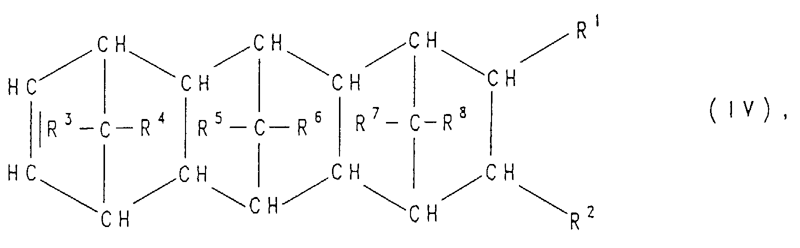 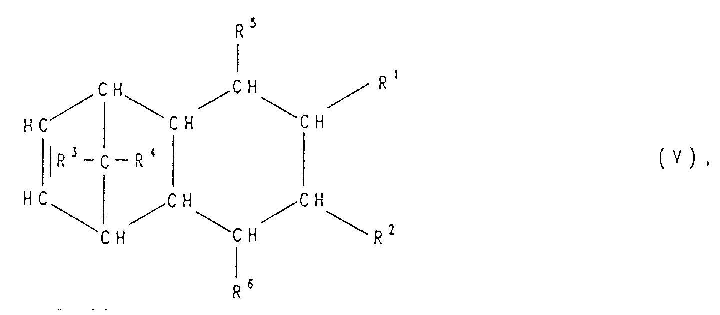 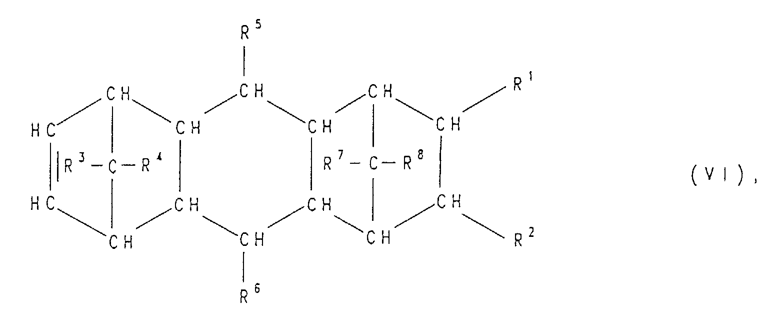 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können,
0 bis 95 Gew.-%, bezogen auf die Gesamtmenge der eingesetzten Monomeren, eines Cycloolefins der Formel VII 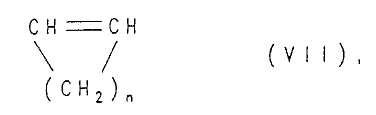 worin n eine Zahl von 2 bis 10 ist, und
0 bis 99 Gew.-%, bezogen auf die Gesamtmenge der eingesetzten Monomeren, mindestens eines acyclischen Olefins der Formel VIII 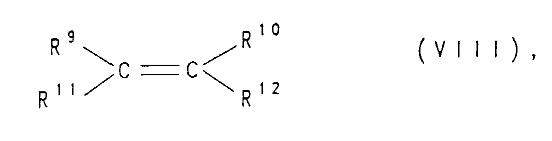 worin R⁹, R¹⁰, R¹¹ und R¹² gleich oder verschieden sind und ein Wasserstoffatom oder einen C₁-C₈-Alkylrest bedeuten, bei Temperaturen von -78 bis 150°C und einem Druck von 0,01 bis 64 bar, in Gegenwart eines Katalysators, welcher aus einem Cokatalysator und einem Metallocen der Formel XI 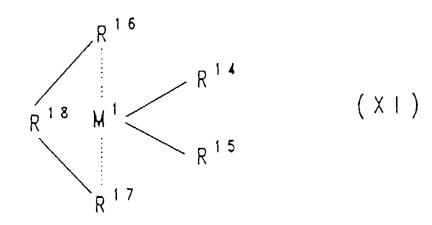 besteht, worin
M¹ Titan, Zirkon, Hafnium, Vanadium, Niob oder Tantal ist,
R¹⁴ und R¹⁵ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R¹⁶ und R¹⁷ einen ein- oder mehrkernigen Kohlenwasserstoffrest, welcher mit dem Zentralatom M¹ eine Sandwichstruktur bilden kann, bedeuten,
R¹⁸ 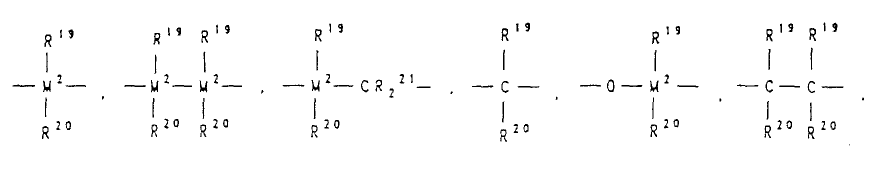 = BR¹⁹, = AlR¹⁹, -Ge-, -Sn-, -O-, -S-, = SO, =SO₂, = NR¹⁹, = CO, = PR¹⁹, oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₅-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Aralkenylgruppe oder eine C₇-C₄-Alkylarylgruppe bedeuten oder R¹⁹ und R²⁰ oder R¹⁹ und R²¹ jeweils mit den sie verbindenden Atomen einen Ring bilden, und
M² Silizium, Germanium oder Zinn ist, polymerisiert und jeweils bei einer Molekulargewichtsverteilung M_{w}/Mₙ kleiner 2, immer bezogen auf den sich bildenden Polymerblock, einmal oder mehrmals die Reaktionsbedingungen derart verändert, daß sich das Monomer-Comonomer-Verhältnis um mindestens 10 % verändert oder zu dem Monomer oder den Monomeren ein weiteres polymerisierbares Monomer der Formeln I - VIII zudosiert wird, wobei das Verfahren in mindestens zwei Polymerisationstufen durchgeführt wird.

2. Verfahren gemäß Anspruch 1, dadurch gekennzeichnet, daß eine Verbindung der Formel I oder der Formel III und eine Verbindung der Formel VIII blockcopolymerisiert werden.

3. Verfahren gemäß Anspruch 1 oder 2, dadurch gekennzeichnet, daß als Verbindung der Formel I Norbornen verwendet wird.

4. Verfahren gemäß einem oder mehreren der Ansprüche 1 - 3, dadurch gekennzeichnet, daß als Verbindung der Formel III Tetracyclododecen verwendet wird.

5. Verfahren gemäß einem oder mehreren der Ansprüche 1 - 4, dadurch gekennzeichnet, daß als Verbindung der Formel VIII Ethylen oder Propylen verwendet wird.

6. Verfahren gemäß einem oder mehreren der Ansprüche 1 - 5, dadurch gekennzeichnet, daß ein Norbornen/Ethylen-Blockcopolymer hergestellt wird.

7. Verfahren gemäß einem oder mehreren der Ansprüche 1 - 6, dadurch gekennzeichnet, daß während mindestens einer Polymerisationsstufe die Monomerzusammensetzung des Reaktionsmediums kontinuierlich verändert wird.

8. Verfahren gemäß Anspruch 1, dadurch gekennzeichnet, daß in der ersten Polymerisationsstufe ein Monomer eingesetzt wird.

9. Verfahren gemäß Anspruch 8, dadurch gekennzeichnet, daß als Monomer in der ersten Polymerisationsstufe eine Verbindung der Formeln I - VII eingesetzt wird.

10. Verfahren gemäß einem oder mehreren der Ansprüche 1 - 9, dadurch gekennzeichnet, daß als Cokatalysator ein Aluminoxan der Formel (IX) 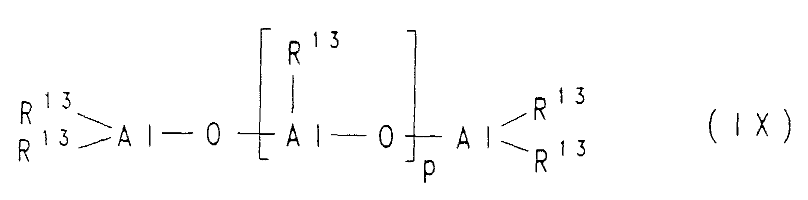 für den linearen Typ und/oder der Formel (X) 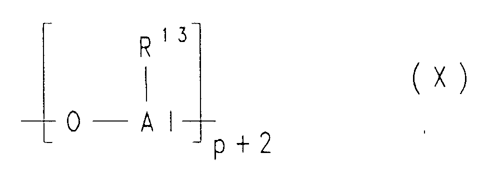 für den cyclischen Typ verwendet wird, wobei in den Formeln (IX) und (X) die Reste R¹³ gleich oder verschieden sind und eine C₁-C₆-Alkylgruppe, eine C₆-C₁₈-Arylgruppe, Benzyl oder Wasserstoff bedeuten, und p eine ganze Zahl von 2 bis 50 ist.

11. Cycloolefinblockcopolymer, herstellbar gemäß einem oder mehreren der Ansprüche 1 - 10.

12. Verwendung eines Cycloolefinblockcopolymers gemäß Anspruch 11 als Phasenvermittler.

13. Verwendung eines Cycloolefinblockcopolymers gemäß Anspruch 11 als Legierungskomponente in Polymerlegierungen mit Cycloolefincopolmyeren.

## Claims

1. A process for the preparation of a cycloolefin block copolymer, wherein 0.1 to 95 % by weight, with respect to the total amount of monomers employed, of at least one monomer of the formulae I, II, III, IV, V or VI 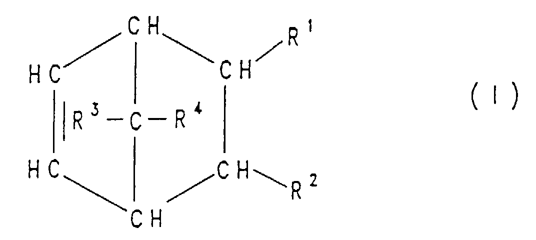 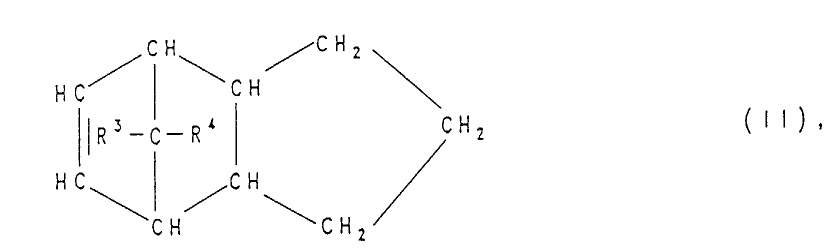 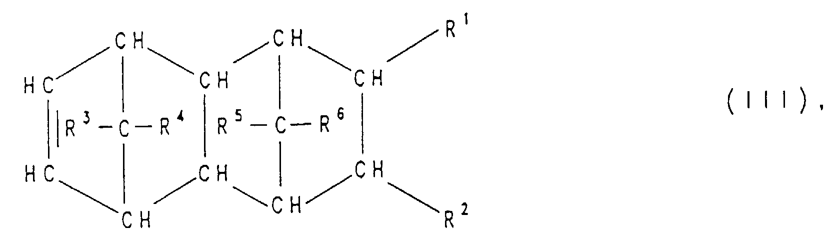 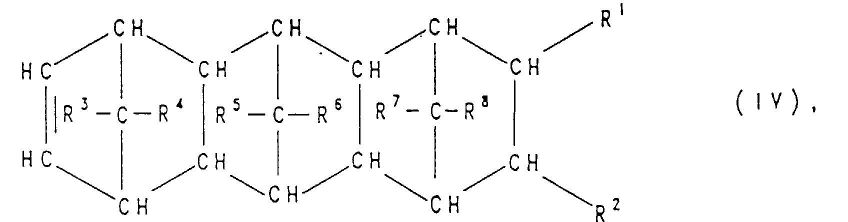 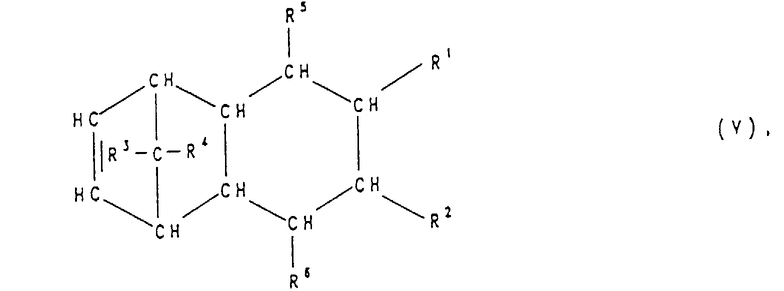 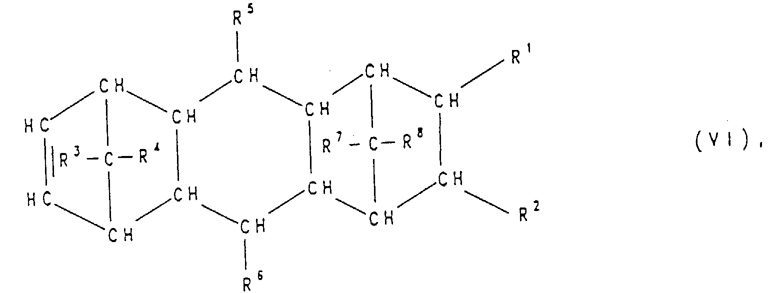 in which R¹, R², R³, R⁴, R⁵, R⁶, R⁷ and R⁸ are identical or different and are a hydrogen atom or a C₁-C₈-alkyl radical, it being possible for the same radicals in the various formulae to have different meanings, 0 to 95 % by weight, with respect to the total amount of monomers employed, of a cycloolefin of the formula VII 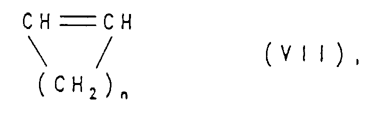 in which n is a number from 2 to 10, and 0 to 99 % by weight, with respect to the total amount of monomers employed, of at least one acyclic olefin of the formula VIII 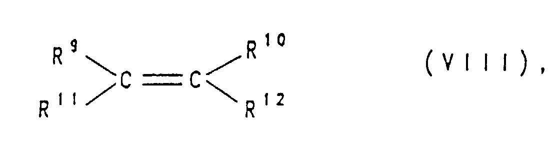 in which R⁹, R¹⁰, R¹¹ and R¹² are identical or different and are a hydrogen atom or a C₁-C₈-alkyl radical, are polymerized at temperatures of -78 to 150°C and a pressure of 0.01 to 64 bar, in the presence of a catalyst which is composed of a cocatalyst and a metallocene of the formula XI 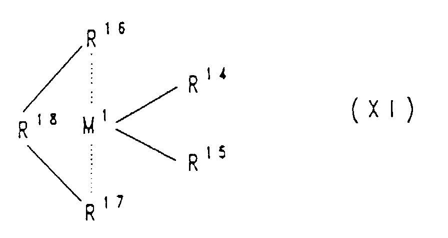 in which
M¹ is titanium, zirconium, hafnium, vanadium, niobium or tantalum,
R¹⁴ and R¹⁵ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R¹⁶ and R¹⁷ are a mononuclear or polynuclear hydrocarbon radical which can form a sandwich structure with the central atom M¹,
R¹⁸ is 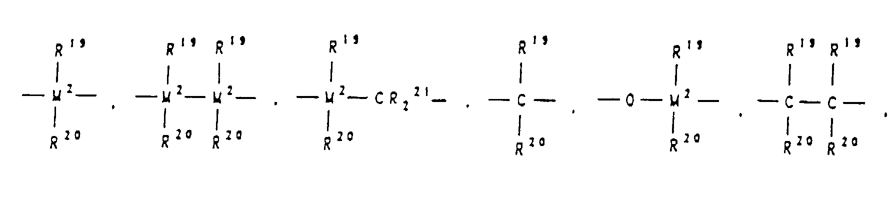 = BR¹⁹, = AlR¹⁹, -Ge-, -Sn-, -O-, -S-, = SO, =SO₂, = NR¹⁹, = CO, = PR¹⁹, or = P(O)R¹⁹, where R¹⁹, R²⁰ and R²¹ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-aralkenyl group or a C₇-C₄₀-alkylaryl group, or R¹⁹ and R²⁰, or R¹⁹ and R²¹, form a ring, in each case with the atoms linking them, and
M² is silicon, germanium or tin, and, in each case at a molecular weight distribution M_{w}/Mₙ of less than 2, always with respect to the polymer block forming, the reaction conditions are changed one or more times in such a way that the monomer/comonomer ratio changes by at least 10 % or a further polymerizable monomer of the formulae I-VIII is metered into the monomer or the monomers, the process being carried out in at least two polymerization stages.

2. The process as claimed in claim 1, wherein a compound of the formula I or of the formula III and a compound of the formula VIII are block-copolymerized.

3. The process as claimed in claim 1 or 2, wherein the compound of the formula I used is norbornene.

4. The process as claimed in one or more of claims 1-3, wherein the compound of the formula III used is tetracyclododecene.

5. The process as claimed in one or more of claims 1-4, wherein the compound of the formula VIII used is ethylene or propylene.

6. The process as claimed in one or more of claims 1-5, wherein a norbornene/ethylene block copolymer is prepared.

7. The process as claimed in one or more of claims 1-6, wherein the monomer composition of the reaction medium is continuously changed during at least one polymerization stage.

8. The process as claimed in claim 1, wherein a monomer is used in the first polymerization stage.

9. The process as claimed in claim 8, wherein the monomer used in the first polymerization stage is a compound of the formulae I-VII.

10. The process as claimed in one or more of claims 1-9, wherein the cocatalyst used is an aluminoxane of the formula (IX) 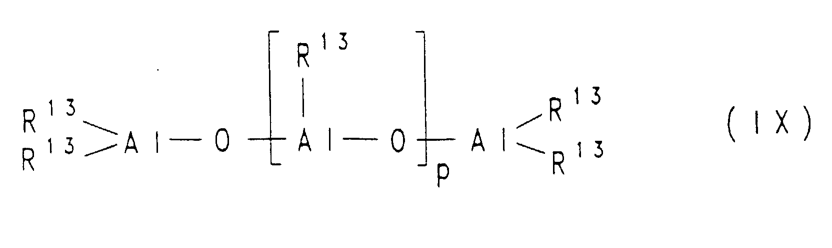 for the linear type and/or of the formula (X) 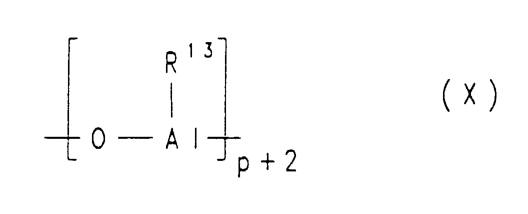 for the cyclic type, where, in the formulae (IX) and (X), the radicals R¹³ are identical or different and are a C₁-C₆-alkyl group, a C₆-C₁₈-aryl group, benzyl or hydrogen, and p is an integer from 2 to 50.

11. A cycloolefin block copolymer which can be prepared as claimed in one or more of claims 1-10.

12. The use of a cycloolefin block copolymer as claimed in claim 11 as a phase compatibilizer.

13. The use of a cycloolefin block copolymer as claimed in claim 11 as a blending component in polymer blends with cycloolefin copolymers.

## Revendications

1. Procédé pour la préparation de copolymères séquencés de cyclooléfines, caractérisé en ce que l'on polymérise de 0,1 à 95 % en poids par rapport au poids total du monomère utilisé, au moins un monomère de formules I, II, III, IV, V ou VI 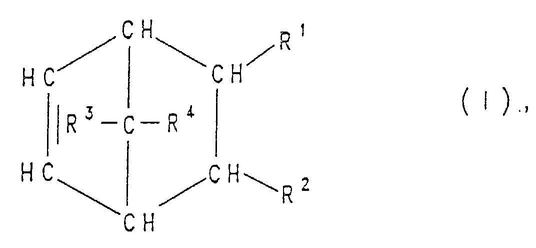 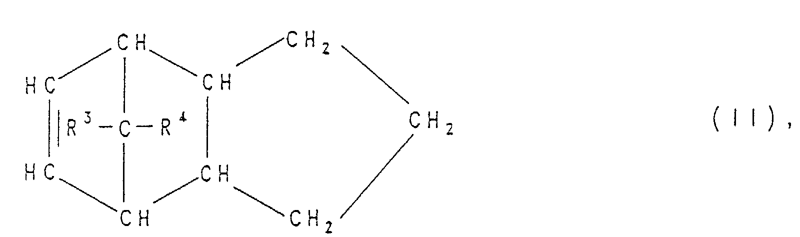 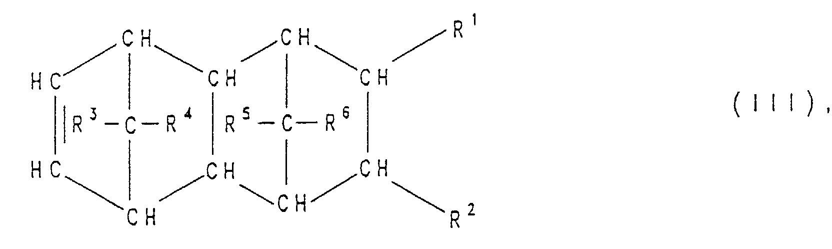 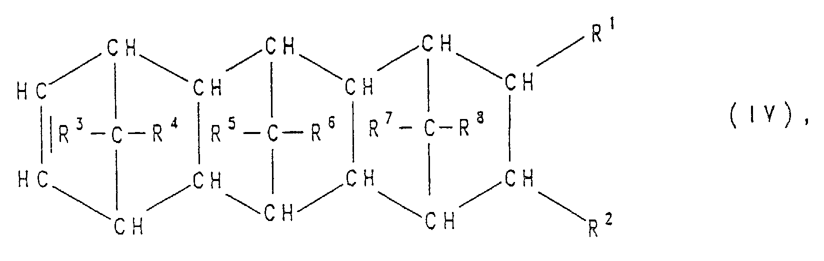 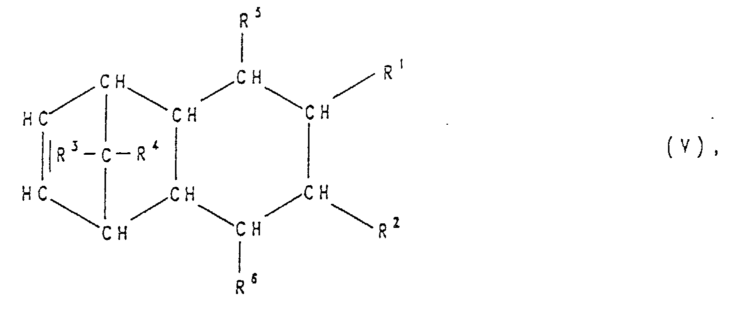 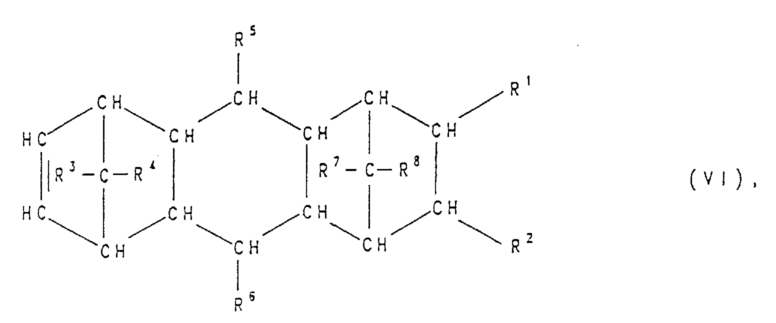 dans lesquelles R¹, R², R³, R⁴, R⁵, R⁶, R⁷ et R⁸ sont identiques ou différents, et représentent un atome d'hydrogène ou un reste alkyle en C₁-C₈, des restes identiques dans les différentes formules pouvant aussi avoir des significations différentes, de 0 à 95 % en poids par rapport à la quantité totale de monomère utilisée d'une cyclooléfine de formule VII 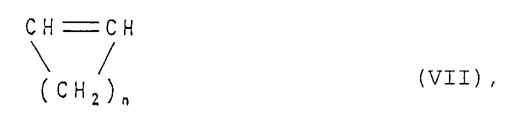 dans laquelle n va de 2 à 10, et de 0 à 99 % en poids par rapport à la quantité totale des monomères utilisés, d'une oléfine acyclique de formule VIII 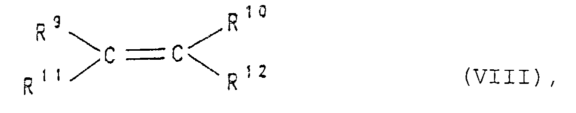 dans laquelle R⁹, R¹⁰, R¹¹ et R¹² sont identiques ou différents, et représentent un atome d'hydrogène, ou un reste alkyle en C₁-C₈, à une température de -78 à 150 °C et une pression de 0,01 à 64 bars, en présence d'un catalyseur, qui est constitué d'un cocatalyseur et d'un métallocène de formule XI 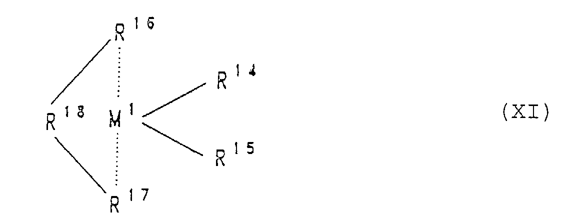 dans laquelle
M¹ représente le titane, le zirconium, l'hafnium, le vanadium, le niobium ou le tantale,
R¹⁴ et R¹⁵ sont identiques ou différents, et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R¹⁶ et R¹⁷ représentent un reste hydrocarboné mono- ou polycyclique, qui peut former une structure sandwich avec l'atome central M¹,
R¹⁸ 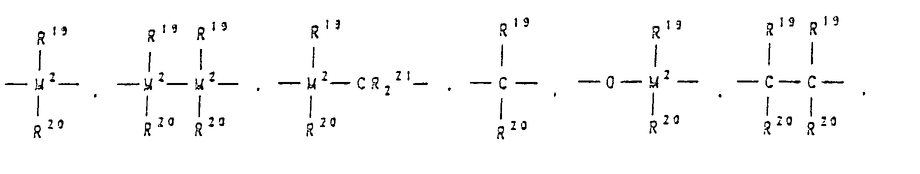 =BR¹⁹, =AlR¹⁹, -Ge-, -Sn-, -O-, -S-, =SO, =SO₂, =NR¹⁹, =CO, =PR¹⁹ ou =P(O)R¹⁹, R¹⁹, R²⁰ et R²¹ étant identiques ou différents, et représentent un atome d'hydrogène, un atome d'halogène, un groupe alkyle en C₁-C₁₀, un groupe fluoralkyle en C₁-C₁₀, un groupe fluoraryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe aralcényle en C₈-C₄₀ ou un groupe alkylaryle en C₇-C₄₀, ou R¹⁹ et R²⁰ ou R¹⁹ et R²¹ chacun avec les atomes qui les relient, forment un cycle, et
M² représente le silicium, le germanium ou l'étain, et on change chaque fois pour une dispersité moléculaire M_{w}/Mₙ inférieure à 2, toujours par rapport au bloc polymère en cours de formation, on change les conditions réactionnelles de façon telle que le rapport du monomère au comonomère change d'au moins 10 % ou que l'on ajoute au monomère ou aux monomères un autre monomère polymérisable de formules I à VIII, le procédé étant mis en oeuvre dans au moins deux étapes de polymérisation.

2. Procédé selon la revendication 1, caractérisé en ce que l'on copolymérise un composé de formule I ou de formule III et un composé de formule VIII, pour obtenir des copolymères séquencés.

3. Procédé selon la revendication 1 ou 2, caractérisé en ce que l'on utilise le norbornène en tant que composé de formule I.

4. Procédé selon une ou plusieurs des revendications 1 à 3, caractérisé en ce que l'on utilise le tétracyclododécène en tant que composé de formule III.

5. Procédé selon une ou plusieurs des revendications 1 à 4, caractérisé en ce que l'on utilise l'éthylène ou le propylène en tant que composé de formule VIII.

6. Procédé selon une ou plusieurs des revendications 1 à 5, caractérisé en ce que l'on prépare un copolymère séquencé du norbornène/éthylène.

7. Procédé selon une ou plusieurs des revendications 1 à 6, caractérisé en ce que l'on change en continu, au moins dans une étape de polymérisation, la composition en monomères du milieu réactionnel.

8. Procédé selon la revendication 1, caractérisé en ce que l'on utilise un monomère dans la première étape de polymérisation.

9. Procédé selon la revendication 8, caractérisé en ce que l'on utilise, en tant que monomère dans la première étape de polymérisation, un composé de formules I à VII.

10. Procédé selon une ou plusieurs des revendications 1 à 9, caractérisé en ce que l'on utilise en tant que cocatalyseur un aluminoxane de formule (IX) 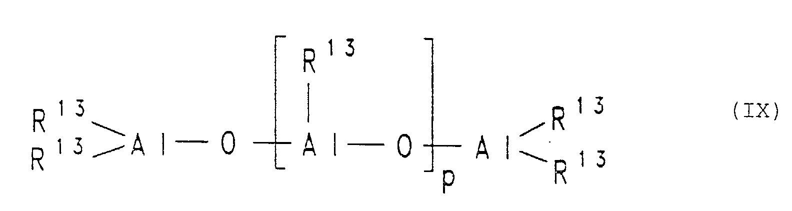 pour le type linéaire, et/ou de formule (X) 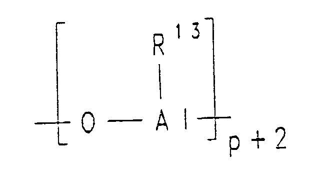 pour le type cyclique, dans les formules (IX) et (X), les restes R¹³ étant identiques ou différents et représentent un groupe alkyle en C₁-C₆, un groupe aryle en C₆-C₁₈, un groupe benzyle ou un atome d'hydrogène, et p est un nombre entier de 2 à 50.

11. Copolymère séquencé de cyclooléfines, que l'on peut préparer selon une ou plusieurs des revendications 1 à 10.

12. Utilisation d'un copolymère séquencé de cyclooléfines selon la revendication 11 en tant qu'agent médiateur de phases.

13. Utilisation d'un copolymère séquencé de cyclooléfines selon la revendication 11, en tant que composant d'alliage dans les alliages de polymères avec des copolymères de cyclooléfines.
